# EUROPÄISCHE PATENTSCHRIFT

(11) **EP 1 728 380 B1**
(45) Veröffentlichungstag und Bekanntmachung des Hinweises auf die Patenterteilung: **04.09.2013**
(21) Anmeldenummer: 05728225.3
(22) Anmeldetag: 15.03.2005
(51) Int. Cl.: H04N 1/00, B41F 22/00, G06T 7/00

(54) **VERFAHREN ZUR FRÜHZEITIGEN ERKENNUNG EINER ABWEICHUNG IN VON EINER DRUCKMASCHINE ERZEUGTEN DRUCKBILDERN EINER LAUFENDEN PRODUKTION**
METHOD FOR THE EARLY IDENTIFICATION OF A DEVIATION IN THE PRINTED IMAGES THAT HAVE BEEN CREATED BY A PRINTING PRESS DURING CONTINUOUS PRODUCTION
PROCEDE D'IDENTIFICATION PRECOCE D'UN ECART DANS DES IMAGES IMPRIMEES PRODUITES EN CONTINU PAR UNE PRESSE D'IMPRESSION

(30) Priorität: 23.03.2004 DE 102004014547
(43) Veröffentlichungstag der Anmeldung: 06.12.2006
(73) Patentinhaber: Koenig & Bauer AG, 97080 Würzburg (DE)
(72) Erfinder: TÜRKE, Thomas, 1027 Lonay (CH); WILLEKE, Harald, Heinrich, 33102 Paderborn (DE)
(86) Internationale Anmeldenummer: PCT/EP2005/051162
(87) Internationale Veröffentlichungsnummer: WO 2005/094054

(56) Entgegenhaltungen:
- US-A- 4 685 139
- US-A- 5 712 921

## Beschreibung

Verfahren zur frühzeitigen Erkennung einer Abweichung an in einer Druckmaschine erzeugten Druckbildern eines Druckerzeugnisses

Die Erfindung betrifft ein Verfahren zur frühzeitigen Erkennung einer Abweichung an in einer Druckmaschine erzeugten Druckbildern eines Druckerzeugnisses gemäß dem Anspruch 1.

Von einer Druckmaschine erzeugte Druckbilder werden seit langem vom Bedienpersonal der Druckmaschine in einer laufenden Produktion auf ihre jeweilige Druckqualität überprüft. Dabei erfolgt eine Klassifizierung in Druckerzeugnisse mit einer guten oder schlechten Qualität, d. h. das Druckbild dieser Druckerzeugnisse wird entweder als gut oder als schlecht, d. h. fehlerbehaftet, klassifiziert.

Durch die US 4,685,139 A ist ein Verfahren zur Erkennung eines Fehlers an in einer Druckmaschine erzeugten Druckbildern eines Druckerzeugnisses bekannt, wobei der Fehler aus einem Vergleich einer in einem laufenden Druckprozess mit einer Farbzeilenkamera aktuell aufgenommenen Aufnahme von mindestens einem der Druckbilder mit einem Referenzbild ermittelt wird, wobei aus der Aufnahme des Druckbildes und aus dem Referenzbild Amplitudenwerte einzelner Farbkanäle der Farbzeilenkamera hinsichtlich eines aus mehreren Pixeln bestehenden Pixelfeldes ermittelt werden, wobei das Druckerzeugnis als von einer schlechten Druckqualität klassifiziert wird, wenn die ermittelte Abweichung eine eingestellte Entscheidungsschwelle überschreitet. Dabei wird zuerst die absolute Abweichung zu demjenigen Referenzwert ermittelt, der für jedes Pixel abgespeichert ist. Danach findet eine Überprüfung statt, bei der festgestellt wird, ob sich die Pixelabweichungen innerhalb eines bestimmten Toleranzbereichs befinden. Bei Überschreiten des Toleranzbereiches wird dies als Fehler betrachtet.

Ferner ist durch die DE 40 23 320 A1 ein Verfahren zur Erfassung und Steuerung der Qualität von Druckerzeugnissen, insbesondere während des Druckvorganges, bekannt, wobei die Auswertung für jeden Bogen erfolgt und jedem Bogen in einer Primärphase das Prädikat "gut" oder "schlecht" zuordnet, wobei nach der Feststellung eines fehlerbehafteten Bogens in einer Sekundärphase unter Zuhilfenahme eines Expertensystems zusätzlich drei Farb-Istbilder zur Bestimmung des Fehlertyps herangezogen werden, wobei bei Überschreitung einer voreingestellten Zahl von Fehlerbogen ein Alarmsignal ausgelöst wird.

Durch die DE 199 40 879 A1 ist ein Verfahren zum Druckbildvergleich erfasster Bilder mit einem Referenzbild bekannt, wobei die zu vergleichenden Bilder in Pixeldaten digitalisiert und gespeichert sind.

US-A-5712921 zeigt ein System zur Qualitätskontrolle von Druckerzeugnissen, bei dem ein Alarm ausgelöst wird, wenn der Unterschied zwischen einem Testbild und einem Referenzbild ("prototype image") eine voreingestellte Schwelle / Bedingung überschreitet.

Über Rechenoperationen, die eine blockweise Übereinstimmung zwischen Testbild und Referenzbild berechnen, wird der Grad der Übereinstimmung zwischen gedrucktem Bild und Referenzbild ermittelt. Fällt der Grad der Übereinstimmung unter einen vom Benutzer festgelegten Wert, wird eine Warnung ausgegeben. Bei Unterschreitung eines weiteren festgelegten Messwertes wird ein Fehler ausgegeben.

Der Erfindung liegt die Aufgabe zugrunde, ein alternativer Verfahren zur frühzeitigen Erkennung einer alternatives.

Abweichung in von einer Druckmaschine erzeugten Druckbildern einer laufenden Produktion zu schaffen.

Die Aufgabe wird erfindungsgemäß durch die Merkmale des Anspruchs 1 gelöst.

Die mit der Erfindung erzielbaren Vorteile bestehen insbesondere darin, dass in einem laufenden Druckprozess ein sich langsam aufbauender Fehler frühzeitig erkannt und dessen Ursache vom Bedienpersonal durch eine manuell durchzuführende oder automatisierte Gegenmaßnahme behoben werden kann, bevor die Qualität des Druckerzeugnisses einen als schlecht zu klassifizierenden Zustand annimmt und der Druckprozess zu einer Produktion fehlerbehafteter, nicht verkaufsfähiger Druckerzeugnisse führt. Die zusätzlich zu einer Entscheidung über eine gute oder schlechte Druckqualität vorgesehene weitere Entscheidungsschwelle ermöglicht, dass eine geringe, noch im Toleranzbereich liegende Abweichung von in der laufenden Produktion erzeugten Druckbildern angezeigt wird, bevor sich diese Abweichung zu einem kritischen Fehler aufbaut. Dadurch kann frühzeitig eine geeignete Gegenmaßnahme ergriffen werden, ohne das diese Abweichung zu einer Produktion von Druckerzeugnissen mit einer schlechten Qualität führt. Überdies hat insbesondere die Möglichkeit zur getrennten Einstellung der Warnschwelle und der Fehlerschwelle den Vorteil, dass ein Abstand zwischen diesen beiden Entscheidungsschwellen vom Bedienpersonal der Druckmaschine an die Bedürfnisse der jeweiligen Produktion angepasst werden kann, denn für unterschiedliche Druckerzeugnisse kann es erforderlich sein, deren erlaubte Druckabweichungen innerhalb bestimmter Toleranzen unterschiedlich einzustellen, weil die Qualitätsanforderungen an diese unterschiedlichen, aber auf derselben Druckmaschine produzierten Druckerzeugnisse voneinander verschieden sind.

Die Erfindung ist in den Zeichnungen dargestellt und wird im Folgenden näher beschrieben.

Es zeigen:
- Fig. 1: eine schematische Darstellung eines Inspektionssystems;
- Fig. 2: eine zweidimensionale Darstellung eines Pixelfeldes;
- Fig. 3: ein Referenzbild mit Minimal- und Maximalwerte für jedes Pixel;
- Fig. 4: ein Vergleich des aktuell aufgenommenen Druckbildes mit seinem Referenzbild;
- Fig. 5: eine Darstellung der Bewertung der Abweichung zum Referenzbild über zwei Entscheidungsschwellen.

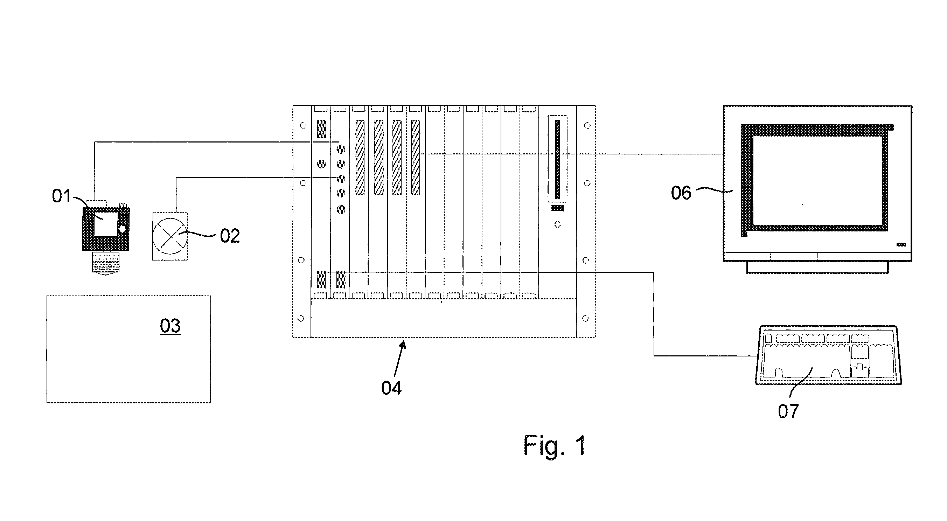

Ein insbesondere für eine Druckbildkontrolle geeignetes Inspektionssystem weist gemäß seiner schematischen Darstellung in der Fig. 1 eine oder mehrere miteinander gekoppelte Farbzeilenkameras 01 oder eine Farbflächenkamera 01 auf, die ein von einer Beleuchtungseinrichtung 02 beleuchtetes Druckbild 03 aufnimmt, wobei das Druckbild 03 mit einer Druckmaschine auf einem z. B. aus Papier bestehendem Bedruckstoff erzeugt worden ist. Von der Farbzeilenkamera 01 oder der Farbflächenkamera 01 aus der Aufnahme des Druckbildes ermittelte Amplitudenwerte Axy der einzelnen Farbkanäle werden in einem Bildverarbeitungssystem 04 verrechnet. Die Ausgabe des Ergebnisses erfolgt z. B. auf einem mit dem Bildverarbeitungssystem 04 verbundenen Monitor 06.

Eingaben, z. B. dem Bildverarbeitungssystem 04 für seine Berechnungen notwendigerweise mitzuteilende Parameter, werden über eine an das Bildverarbeitungssystem 04 angeschlossene Tastatur 07 eingegeben.

In einer Lernphase während einer als gut klassifizierten Produktion werden die Amplitudenwerte Axy der Farbzeilenkamera 01 oder der Farbflächenkamera 01 von dem Bildverarbeitungssystem 04 zu einem Referenzbild verrechnet.

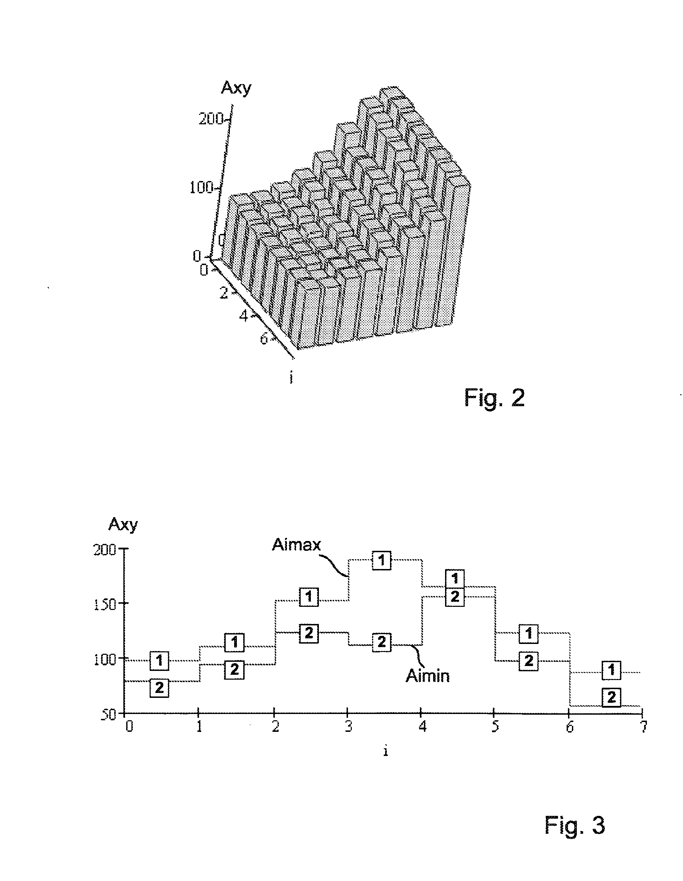

Fig. 2 zeigt eine zweidimensionale Darstellung eines aus der Aufnahme des Druckbildes resultierenden, beispielsweise quadratischen Pixelfeldes, wobei das Pixelfeld in seiner Grundfläche z. B. aus 8x8 Pixeln besteht und die Amplitudenwerte Axy des Pixelfeldes auf dessen Hochachse aufgetragen sind. Aus Gründen der Übersichtlichkeit werden die folgenden, aus dem Pixelfeld entnommenen oder abgeleiteten Daten nur für einen eindimensionalen Bereich von einer einzigen Zeile mit z. B. acht Pixeln i mit i = 0 bis 7 dargestellt.

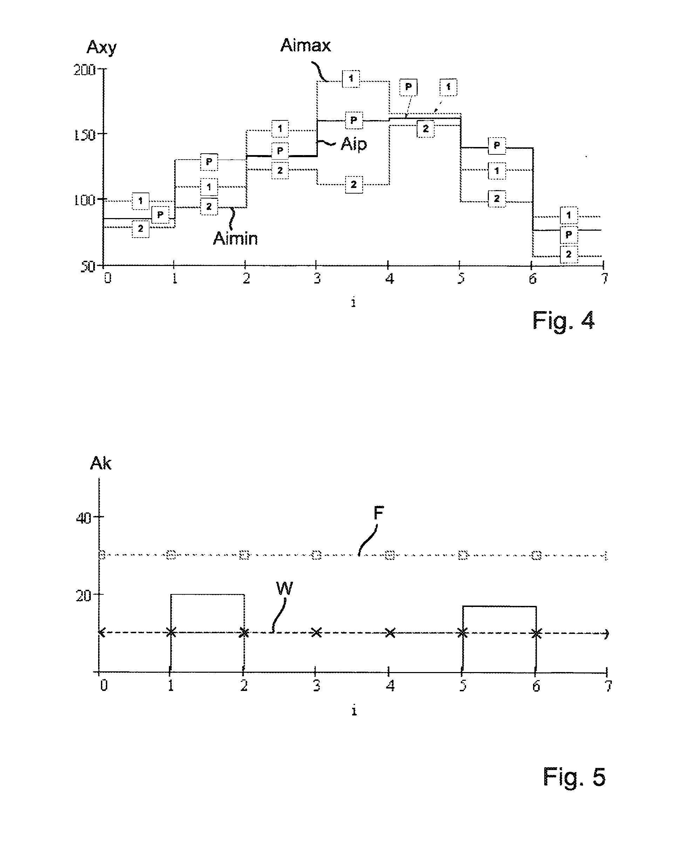

Fig. 3 zeigt ein vorzugsweise aus mehreren Aufnahmen generiertes Referenzbild mit den jeweiligen Maximalwerten Aimax und Minimalwerten Aimin für jedes Pixel i. Anschließend werden die Amplitudenwerte Aip des aktuell aufgenommenen Druckbildes mit diesem aus dem Verlauf der jeweiligen Maximalwerte Aimax und Minimalwerte Aimin bestehenden Referenzbild verglichen und die Abweichungen ermittelt, wie es die Fig. 4 aufzeigt. In dem Vergleich der Amplitudenwerte Aip des aktuell aufgenommenen Druckbildes mit seinem Referenzbild wird für jede Abweichung insbesondere der Kontrast AK zum Referenzbild bewertet.

Die Bewertung der zwischen dem aktuell aufgenommenen Druckbild und dem Referenzbild ermittelte Abweichung erfolgt über zwei getrennt einzustellende Entscheidungsschwellen W und F, wobei eine Entscheidungsschwelle eine Warnschwelle W und die andere Entscheidungsschwelle eine Fehlerschwelle F bilden (Fig. 5). Damit ist jede der Entscheidungsschwellen unabhängig von der jeweils anderen einstellbar. Sobald die Abweichung, d. h. insbesondere der Kontrast AK zum Referenzbild für ein oder mehrere Pixel i oberhalb der Warnschwelle W, aber noch unterhalb der Fehlerschwelle F liegt, wird für diesen Bildbereich eine Warnung ausgegeben. Sobald für ein Pixel i die Abweichung, d. h. insbesondere der Kontrast AK zum Referenzbild oberhalb der Fehlerschwelle F liegt, wird dieser Bildbereich als Fehler bewertet. Die Unterscheidung zwischen einem Fehler und einer Warnung erfolgt also über das Maß der Abweichung im Bezug zur gelernten Referenz.

Zusätzlich kann eine weitere Auswertung über die Anzahl der Warnungen oder Fehler von Pixeln i in einer lokalen Nachbarschaft erfolgen. Weicht z. B. nur ein einzelnes Pixel i von dem gelernten Referenzbild ab, so ist dies eine Warnung oder ein Fehler geringer Größe oder Wichtigkeit und kann unter Umständen vernachlässigt werden. Aus diesem Grunde wird eine Betrachtung der Größe oder Wichtigkeit der Warnung und/oder des Fehlers nachgeschaltet, wobei in dieser Betrachtung überprüft wird, ob in einem z. B. 8x8 großen Pixelfeld in lokaler Nähe mehrere Pixel i aus der Referenz heraustreten und zusammen eine flächenmäßig größere Abweichung ergeben. Somit kann nicht nur die Abweichung, d. h. insbesondere der Kontrast AK als solche(r), sondern auch die Fläche, in der eine Abweichung von dem gelernten Referenzbild besteht, ermittelt und diese Fläche bezüglich seiner Entscheidungsschwellen W und F eingestellt werden. Über einstellbare Entscheidungsschwellen W und F kann diejenige Anzahl von Abweichungen im Auswertebereich angegeben werden, ab der entweder eine Warnung oder ein Fehler generiert bzw. angezeigt werden.

Damit bei dieser Betrachtung nicht Fehler mit hohem Kontrast AK, aber geringer Größe übersehen werden, wird zudem die Fläche oberhalb der Fehlerschwelle F ermittelt. Wird dabei ein einstellbarer Wert, ein sogenanntes Fehlergewicht FG, in einem lokalen Bereich von z. B. 8x8 Pixeln überschritten, wird unabhängig von der Fläche der Abweichung im Kontrast AK ein Fehler gemeldet.

Die Anzeige der Abweichungen erfolgt am Monitor 06 z. B. getrennt nach der Art der Abweichung vorzugsweise in unterschiedlichen Farben, wobei die Anzeige auf dem Monitor 06 vorzugsweise positionsgenau über dem aktuellen Druckbild eingeblendet wird. Der Bediener wird dadurch in die Lage versetzt, bei einer laufenden Produktion der Druckmaschine sofort zu erkennen, in welchem Druckwerk die Ursache für eine Abweichung in der Qualität des Druckerzeugnisses auftritt. Die Ursache kann dann bewertet und behoben werden.

### Bezugszeichenliste

- 01: Farbzeilenkamera, Farbflächenkamera
- 02: Beleuchtungseinrichtung
- 03: Druckbild
- 04: Bildverarbeitungssystem
- 05: -
- 06: Monitor
- 07: Tastatur
- Axy: Amplitudenwert
- Aimax: Maximalwert
- Aimin: Minimalwert
- Aip: Amplitudenwert
- AK: Kontrast
- F: Entscheidungsschwelle; Fehlerschwelle
- FG: Fehlergewicht
- i: Pixel
- W: Entscheidungsschwelle; Warnschwelle

## Patentansprüche

1. Verfahren zur frühzeitigen Erkennung einer Abweichung an in einer Druckmaschine erzeugten Druckbildern (03) eines Druckerzeugnisses,
a) wobei von der Druckmaschine erzeugte Druckbilder (03) in einer laufenden Produktion auf ihre jeweilige Druckqualität überprüft werden, wobei eine Klassifizierung in Druckerzeugnisse mit einer guten oder schlechten Qualität erfolgt, indem das Druckbild (03) dieser Druckerzeugnisse entweder als gut oder als fehlerbehaftet klassifiziert wird,
b) wobei für unterschiedliche Druckerzeugnisse deren erlaubte Druckabweichungen innerhalb bestimmter Toleranzen unterschiedlich eingestellt werden,
c) wobei zusätzlich zu einer Entscheidung über eine gute oder schlechte Druckqualität eine weitere Entscheidungsschwelle vorgesehen wird,
d) wobei die zusätzlich zu einer Entscheidung über eine gute oder schlechte Druckqualität vorgesehene weitere Entscheidungsschwelle ermöglicht, dass eine geringe, noch in einem Toleranzbereich liegende Abweichung von in der laufenden Produktion erzeugten Druckbildern (03) angezeigt wird, bevor sich diese Abweichung zu einem kritischen Fehler aufbaut,
e) wobei von einer Farbzeilenkamera (01) oder einer Farbflächenkamera (01) aus der Aufnahme des Druckbildes (03) ermittelte Amplitudenwerte (Axy) der einzelnen Farbkanäle in einem Bildverarbeitungssystem (04) verrechnet werden,
f) wobei in einer Lemphase während einer als gut klassifizierten Produktion die Amplitudenwerte (Axy) der Farbzeilenkamera (01) oder der Farbflächenkamera (01) von dem Bildverarbeitungssystem (04) zu einem Referenzbild verrechnet werden,
g) wobei die Amplitudenwerte (Axy) in einem aus mehreren Pixeln (i) bestehenden Pixelfeld aufgetragen werden,
h) wobei das Referenzbild aus mehreren Aufnahmen mit den jeweiligen Maximalwerten (Aimax) und Minimalwerten (Aimin) für jedes Pixel (i) generiert wird,
i) wobei ein aktuell aufgenommenes Druckbild (03) mit dem Referenzbild verglichen wird,
j) wobei bei einer Abweichung des aktuell aufgenommenen Druckbildes (03) von seinem Referenzbild die zwischen dem aktuell aufgenommenen Druckbild (03) und dem Referenzbild bestehende Abweichung anhand von zwei Entscheidungsschwellen (W) und (F) bewertet wird,
k) wobei eine Entscheidungsschwelle eine Warnschwelle (W) und die andere Entscheidungsschwelle eine Fehlerschwelle (F) bilden,
l) wobei die Unterscheidung zwischen einem Fehler und einer Warnung über das Maß der Abweichung im Bezug zur gelernten Referenz erfolgt.

2. Verfahren nach Anspruch 1, **dadurch gekennzeichnet, dass** jede der Entscheidungsschwellen (W) und (F) unabhängig von der jeweils anderen eingestellt wird.

3. Verfahren nach Anspruch 1, **dadurch gekennzeichnet, dass** beim Erreichen der Warnschwelle (W) eine Warnung generiert wird.

4. Verfahren nach Anspruch 1, **dadurch gekennzeichnet, dass** beim Erreichen der Fehlerschwelle (F) eine Fehlermeldung generiert wird.

5. Verfahren nach Anspruch 1, **dadurch gekennzeichnet, dass** als Abweichung zwischen dem aktuell aufgenommenen Druckbild (03) und dem Referenzbild ein zwischen dem aktuell aufgenommenen Druckbild (03) und dem Referenzbild bestehender Kontrast (AK) bewertet wird.

6. Verfahren nach Anspruch 5, **dadurch gekennzeichnet, dass** eine Warnung ausgegeben wird, wenn der Kontrast (AK) zum Referenzbild für ein oder mehrere Pixel (i) oberhalb der Warnschwelle (W), aber noch unterhalb der Fehlerschwelle (F) liegt.

7. Verfahren nach Anspruch 1, **dadurch gekennzeichnet, dass** eine Fläche des Pixelfeldes ermittelt wird, in der eine Abweichung von dem Referenzbild besteht.

8. Verfahren nach Anspruch 7, **dadurch gekennzeichnet, dass** die Entscheidungsschwellen (W) und (F) für die Fläche des Pixelfeldes eingestellt werden.

## Claims

1. Method for the early recognition of an aberration on print images (03) of a printed product produced in a printing press,
a) wherein print images (03) produced by the printing press in an ongoing production are checked for their respective print quality, wherein a classification into printed products of good or poor quality takes place by the print image (03) of these printed products being classified either as good or as flawed,
b) wherein for different printed products their allowed print deviations are adjusted differently within certain tolerances,
c) wherein additionally to a decision about a good or poor print quality a further decision threshold is provided,
d) wherein the further decision threshold provided additionally to a decision about a good or poor print quality makes it possible that a small deviation still lying in a tolerance range of print images (03) produced in the ongoing production is indicated before this deviation builds up to a critical error,
e) wherein amplitude values (Axy) of the individual ink channels determined by a colour line scan camera (01) or a colour area scan camera (01) from the recording of the printed image (03) are offset in an image processing system (04),
f) wherein the amplitude values (Axy) of the colour line scan camera (01) or of the colour area scan camera (01) are offset by the image processing system (04) to a reference image in a learning phase during a production classified as good,
g) wherein the amplitude values (Axy) are applied in a pixel field consisting of a plurality of pixels (i),
h) wherein the reference image is generated from a plurality of recordings with the respective maximum values (Aimax) and minimum values (Aimin) for each pixel (i),
i) wherein a currently taken print image (03) is compared with the reference image,
j) wherein the deviation existing between the currently recorded print image (03) and the reference image is assessed with the aid of two decision thresholds (W) and (F) in the case of a deviation of the currently recorded print image (03) from its reference value,
k) wherein one decision threshold forms a warning threshold (W) and the other decision threshold forms an error threshold (F),
l) wherein the differentiation between an error and a warning is carried out by means of the measurement of the deviation with respect to the learned reference.

2. Method according to Claim 1, **characterized in that** each of the decision thresholds (W) and (F) is set independently of the in each case other threshold.

3. Method according to Claim 1, **characterized in that** on reaching the warning threshold (W) a warning is generated.

4. Method according to Claim 1, **characterized in that** on reaching the error threshold (F) an error message is generated.

5. Method according to Claim 1, **characterized in that** a contrast (AK) existing between the actually recorded print image (03) and the reference image is assessed as a deviation between the actually recorded print image (03) and the reference image.

6. Method according to Claim 5, **characterized in that** a warning is given if the contrast (AK) for the reference image for one or more pixels (i) is above the warning threshold (W), but still below the error threshold (F).

7. Method according to Claim 1, **characterized in that** an area of the pixel field is determined in which a deviation from the reference image exists.

8. Method according to Claim 7, **characterized in that** the decision thresholds (W) and (F) are adjusted for the area of the pixel field.

## Revendications

1. Procédé permettant la détection précoce d'une divergence entre les images imprimées (03) d'un produit imprimé obtenu dans une machine d'impression,
a) selon lequel des images imprimées (03), produites par la machine d'impression, sont contrôlées sur le plan de leur qualité d'impression dans une production continue, les produits imprimés étant classés en produits de bonne qualité et produits de mauvaise qualité, du fait que l'image imprimée (03) desdits produits imprimés est classée soit comme image correcte, soit comme image avec anomalie,
b) les divergences d'impression autorisées pour divers produits imprimés étant définies différemment à l'intérieur de tolérances déterminées,
c) un seuil de décision supplémentaire étant prévu en plus d'une décision sur une bonne ou une mauvaise qualité d'impression,
d) ledit seuil de décision supplémentaire, prévu en plus d'une décision sur une bonne ou une mauvaise qualité d'impression, permettant qu'une faible divergence, située encore dans une gamme de tolérances, entre les images imprimées (03), produites dans une production continue étant signalée avant que cette divergence ne développe une anomalie critique,
e) des valeurs d'amplitude (Axy) des différents canaux d'encre, déterminées à partir de la prise de vue de l'image imprimée (03) par une caméra filmant les lignes chromatiques (01) ou une caméra filmant les surfaces chromatiques (01), étant calculées dans un système de traitement des images (04),
f) pendant une phase d'apprentissage durant une production classée comme bonne production, les valeurs d'amplitude (Axy) de la caméra filmant les lignes chromatiques (01) ou de la caméra filmant les surfaces chromatiques (01) étant calculées par le système de traitement des images (04) pour obtenir une image de référence,
g) les valeurs d'amplitude (Axy) étant reportées dans un champ de pixels formé par plusieurs pixels (i),
h) l'image de référence étant générée à partir de plusieurs prises de vue avec les valeurs maximales (Aimax) et les valeurs minimales (Aimin) respectives pour chaque pixel (i),
i) une image imprimée (03) enregistrée actuellement étant comparée à l'image de référence,
j) en présence d'une divergence entre l'image imprimée (03) enregistrée actuellement et l'image de référence, la divergence existant entre l'image imprimée (03) enregistrée actuellement et l'image de référence étant évaluée à l'appui de deux seuils de décision (W) et (F),
k) un seuil de décision formant un seuil d'alarme (W) et l'autre seuil de décision formant un seuil d'anomalie (F),
l) la distinction entre une anomalie et une alarme étant effectuée par l'intermédiaire de la valeur de la divergence par rapport à la référence obtenue pendant l'apprentissage.

2. Procédé selon la revendication 1, **caractérisé en ce que** chacun des seuils de décision (W) et (F) est défini indépendamment de l'autre seuil de décision.

3. Procédé selon la revendication 1, **caractérisé en ce qu'**une alarme est générée lorsque le seuil d'alarme (W) est atteint.

4. Procédé selon la revendication 1, **caractérisé en ce qu'**un message d'anomalie est généré lorsque le seuil d'anomalie (F) est atteint.

5. Procédé selon la revendication 1, **caractérisé en ce que** le contraste (AK), existant entre l'image imprimée (03) enregistrée actuellement et l'image de référence, est analysé en tant que divergence entre l'image imprimée (03) enregistrée actuellement et l'image de référence.

6. Procédé selon la revendication 5, **caractérisé en ce qu'**une alarme est déclenchée lorsque le contraste (AK) par rapport à l'image de référence pour un ou plusieurs pixels (i) se situe au-dessus du seuil d'alarme (W), mais encore au-dessous du seuil d'anomalie (F).

7. Procédé selon la revendication 1, **caractérisé en ce qu'**il est déterminé une surface du champ de pixels, dans laquelle existe une divergence par rapport à l'image de référence.

8. Procédé selon la revendication 7, **caractérisé en ce que** les seuils de décision (W) et (F) sont définis pour la surface du champ de pixels.
